# EUROPÄISCHE PATENTSCHRIFT

(11) **EP 1 930 210 B1**
(45) Veröffentlichungstag und Bekanntmachung des Hinweises auf die Patenterteilung: **05.03.2014**
(21) Anmeldenummer: 07020777.4
(22) Anmeldetag: 24.10.2007
(51) Int. Cl.: B60N 2/48

(54) **Kopfstütze, insbesondere für gepanzerte Fahrzeuge**
Head rest, in particular for armoured vehicles
Appuie-tête, en particulier pour véhicules blindés

(30) Priorität: 06.12.2006 DE 102006057826; 30.05.2007 DE 102007025208
(43) Veröffentlichungstag der Anmeldung: 11.06.2008
(73) Patentinhaber: Rheinmetall Landsysteme GmbH, 29345 Unterlüß (DE)
(72) Erfinder: Böttcher, Ralf, 24107 Kiel (DE); Simmat, Dieter, 24232 Schönkirchen (DE)
(74) Vertreter: Dietrich, Barbara

(56) Entgegenhaltungen:
- EP-A- 1 221 396
- WO-A-99/41104
- DE-A1- 19 717 782

## Beschreibung

Bekanntlich dienen Kopfstützen als Schutz für den Kopf eines Fahrzeuginsassen, insbesondere dann, wenn ein Fahrzeug in einen Crash eingebunden ist. Die vorliegende Erfindung betrifft eine Kopfstütze gemäß dem Oberbegriff des Anspruchs 1.

So ist aus der DE 197 17 782 A1 ist eine Sitzeinrichtung in einem Kampffahrzeug bekannt, welche an der Rücklehne eine ausziehbare oder völlig versenkbare Kopfstütze besitzt. Mit einer Seitenkopfstütze an Fahrzeugsitzen beschäftigt sich die DE 200 16 359 U1. Hierbei sind neben der Nackenstütze seitliche Polsterelemente vorgesehen. Eine Kopfstütze variabler Art mit Polsterteilen ist der DE 30 39 934 C2 entnehmbar. Eine variable Kopfstütze für quer zur Fahrtrichtung eingebaute Sitze wird in der DE 102 18 961 B3 beschrieben. Die Einrichtung besteht im Wesentlichen aus einem Montagerahmen, beweglichen Seitenwangen und adaptive Polsterungen. Weitere Kopfstützen werden mit der EP 0 142 822 A2, FR 2 779 394 A1 sowie US 4,971,393 und DE 298 11 734 U1 publiziert.

Zwar erfüllen die vorgenannten Lösungen die Forderungen durch amtlich anerkannte Sachverständige, sie sind aber insbesondere in den neuen Kampffahrzeugen nicht einsetzbar. Grundsätzlich weisen Kampffahrzeuge in der Regel eine Luke auf, so dass eine weitere Schutzanforderung bezüglich des Fahrens "Über-Luke" besteht. Für das Wechseln von "Unter- Luke- Fahren" in "Über- Luke- Fahren" sind die aufgezeigten Lösungen ungeeignet. So wird wegen der Enge der Lukenöffnung ein Mitführen der Kopfstütze als nicht geeignet angesehen.

Die gattungsgemäße EP 1 221 396 A2 betrifft eine einziehbare Kopfstütze für einen Kraftfahrzeugsitz. Ausgehend von einer in die Rückenlehne des Sitzes einklappbaren Kopfstütze wird hier vorgeschlagen, dass die Kopfstützenanordnung ordentlich im Inneren der Sitzlehne aufgenommen wird. Die Kopfstütze kann von einer Benutzungsposition in eine Einklappposition durch Verschwenken um eine Drehachse verbracht werden. Um die beiden Positionen zu definieren, weist die Kopfstützenanordnung ein Anschlagstück auf. Die Kopfstütze umfasst einen oberen und einen unteren Kopfstützrahmen sowie diverse Teile, die ihrerseits zur Bildung der Kopfstütze umpolstert sind.

Die WO 99/41104 A1 beschäftigt sich mit einem Kraftfahrzeugsitz mit einer einstellbaren oder einfahrbaren Kopfstütze. Die Kopfstütze wird für die eingefahrene Position in einen Hohlraum im oberen Bereich der Sitzanordnung geführt und verbleibt in diesem, wenn beispielsweise eine Schwenkbewegung der Sitzlehne erfolgt. Die Kopfstütze selbst ist textiler Natur und ebenfalls gepolstert.

Die Erfindung stellt sich die Aufgabe, eine Kopfstütze zur Erhöhung der Crashsicherheit speziell in der Umgebung von Luken für das Fahren über Luke aufzuzeigen, insbesondere eine platzsparende Unterbringung dieser Kopfstütze.

Gelöst wird die Aufgabe durch die Merkmale des Patentanspruchs 1, 3, 5. Vorteilhafte Ausgestaltungen sind in den Unteransprüchen aufgeführt.

Der Erfindung liegt die Idee zugrunde, die Kopfstütze bevorzugt nur dann in Funktion zu bringen, wenn ein Fahren über Luke vorgesehen ist, die Kopfstütze jedoch einzuklappen, wenn ein Fahren unter Luke angesetzt ist. Die klappbare bzw. hochschwenkbare Kopfstütze/Nackenstütze hat somit in Funktion vorrangig die Aufgabe, ein Überstrecken der Halswirbel eines über Luke fahrenden Besatzungsmitgliedes bei einem Crash ausreichend zu verhindern, im zusammengefalteten bzw. geklappten Zustand eine Sichtbehinderung der anderen Besatzungsmitglieder jedoch auszuschließen bzw. auf ein zulässiges Maß zu minimieren. Die Kopfstütze wird durch eine Halterung am Fahrzeug einmal sicher verstaut und im Gebrauch gehalten. Die Halterung kann zudem gleichzeitig als Führung für das Zusammenklappen dienen.

Die Kopfstütze besitzt dabei im geöffneten Zustand bevorzugt eine Strebenstruktur, starr oder als Seilstruktur aus geeigneten Materialien.

In Weiterführung der Erfindung wird beim Öffnen oder Schließen der Luke die Kopfstütze automatisch in ihren geöffneten oder gefalteten bzw. geklappten Zustand gebracht, so dass keine zusätzlichen Handgriffe für den Bediener der Luke erforderlich sind. Bevorzugt wird eine federnde Lagerung der Betätigungselemente, so dass bei einer ungewollten Blockierung, beispielsweise durch Verschmutzung, Vereisung oder mechanischer Beschädigung einzelner Teile weiterhin eine uneingeschränkte Lukenbetätigung gegeben ist. Im aufgeklappten Zustand sind des Weiteren mechanische Verriegelungselemente vorgesehen, die formschlüssig im Crash-Fall die Kräfte aufnehmen und somit verhindern, dass diese Kräfte von den Betätigungselementen aufgenommen werden müssen.

Bevorzugt können geeignete Polsterungen um bzw. in der Strebenstruktur vorgesehen werden. Diese sind so anzubringen, dass sie das Klappen der Kopfstütze nicht behindern.

Ein weiterer Vorteil dieser Lösung ist, dass sie leicht nachrüstbar ist.

Selbstverständlich findet eine derart versenkbare Kopfstütze nicht nur bei Kampffahrzeugen in Verbindung mit einer Luke ihre Anwendung, sondern auch in anderen Bereichen, wo ein Schutz gegen Überstrecken der Halswirbel vorzusehen ist, wie beispielsweise bei normalen Kraftfahrzeugen, Nutzfahrzeugen, Bussen etc. Dabei besteht die Möglichkeit, die Kopfstütze in die Gebrauchsstellung (geöffneter Zustand) automatisch dann zu verbringen, wenn eine mögliche Crash Situation durch moderne Systeme vorab detektiert wird, spätestens aber dann, wenn der Crash erfolgt ist. Dieses bietet sich insbesondere dort an, wo normaler Weise keine derartige Kopfstützen vorgesehen sind und sie daher in einem geklappten Zustand in einer Sitzlehne oder dergleichen eingebunden sind.

Anhand eines Ausführungsbeispiels mit Zeichnung soll die Erfindung näher erläutert werden. Es zeigt:
- Fig. 1: eine Kopfstütze im aufgeklappten Zustand beim Fahren über Luke,
- Fig. 2: eine weitere Darstellung der aufgeklappten Kopfstütze beim Fahren über Luke,
- Fig. 3: die Kopfstütze im eingeklappten Zustand,
- Fig. 4: eine Darstellung des Versenkens der Kopfstütze ohne Halterung,
- Fig. 5: eine Einzeldarstellung eine Auslösemechanismus,
- Fig. 6: die Kopfstütze mit Bombletschutz abgeschwenkt,
- Fig. 7: die Kopfstütze mit Bombletschutz hoch geschwenkt.

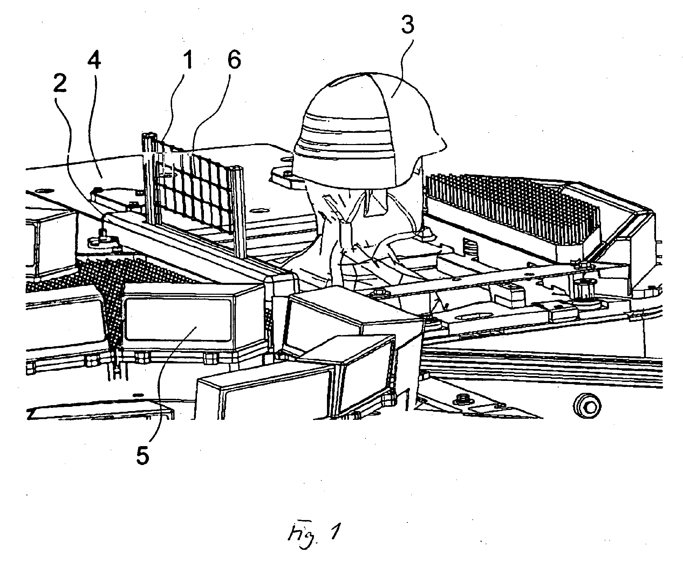

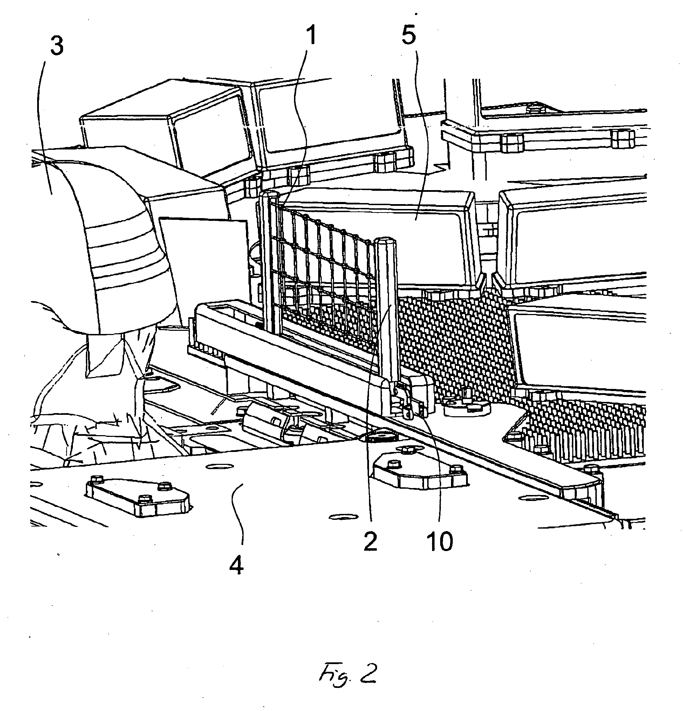

In Fig. 1 bzw. Fig. 2 ist mit 1 eine Kopf- bzw. Nackenstütze gekennzeichnet, die in eine Führung bzw. Halterung 2 der Kopfstütze 1 versenkbar, hier speziell klappbar ist. Mit 3 ist ein Besatzungsmitglied beziffert, welches bei geöffneter Luke über Luke fährt. Auf dem Fahrzeug 4 sind Winkelspiegel 5 angeordnet, die als Sichtmittel für die Fahrzeugbesatzung dienen.

Die Kopfstütze 1 weist eine Strebenstruktur 6 auf, die eine weitere Sicht der anderen Besatzungsmitglieder durch die Sichtmittel 5 und ein einfaches Einklappen der Kopfstütze 1 bei Nichtgebrauch ermöglicht.

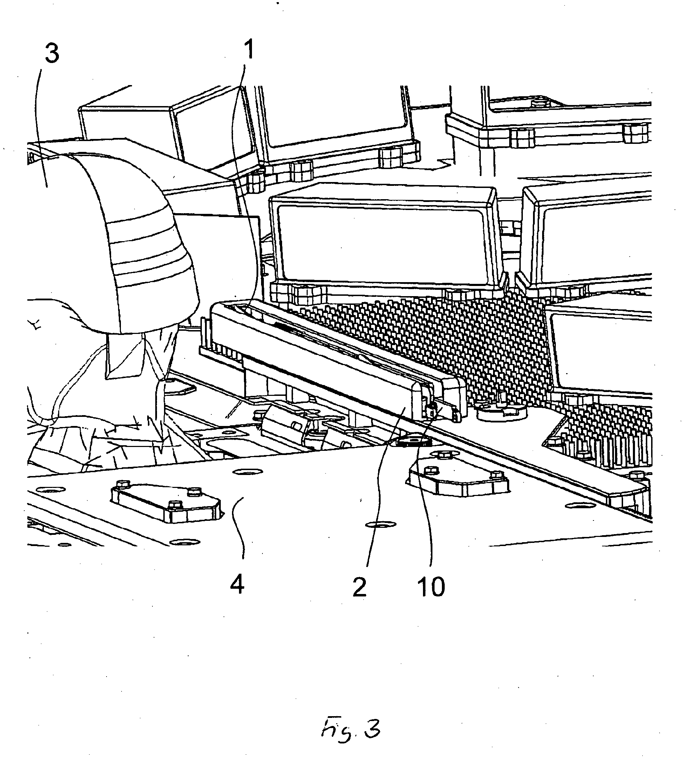

Die Kopfstütze 1 ist über in der Halterung 2 über vorzugsweise federnd gelagerte Betätigungselemente 7 in den zugeklappten (Fig. 3) oder geöffneten Zustand bringbar. Eine zusätzliche Verriegelung (nicht näher dargestellt) übernimmt hierbei die Aufnahme der Kräfte bei einem Crash.

Über eine Anbindung 10 an der Kopfstütze 1 besteht die Möglichkeit, das Aufrichten der Kopfstütze 1 in den Gebrauchszustand mit dem Öffnen der Luke und das Einklappen mit dem Schließen der Luke zu verbinden. Die Kopfstütze wird durch ziehen an der Anbindung 10 aufgerichtet oder eingeklappt.

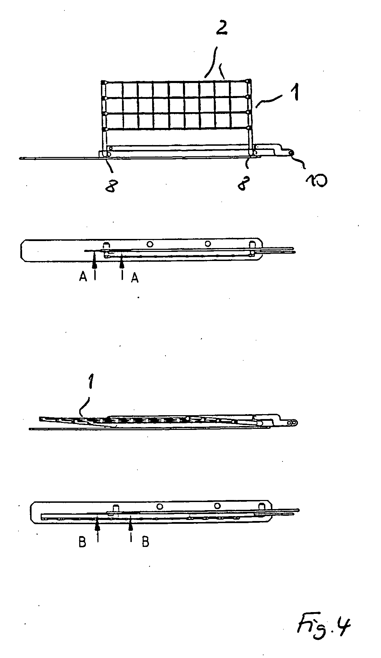

Fig. 4 zeigt in einer vereinfachten Darstellung das Einklappen der Kopfstütze 1 in je einer Seiten- und einer Draufsicht. In der oberen Darstellung ist die Kopfstütze 1 hoch geschwenkt und in der unteren abgeschwenkt.

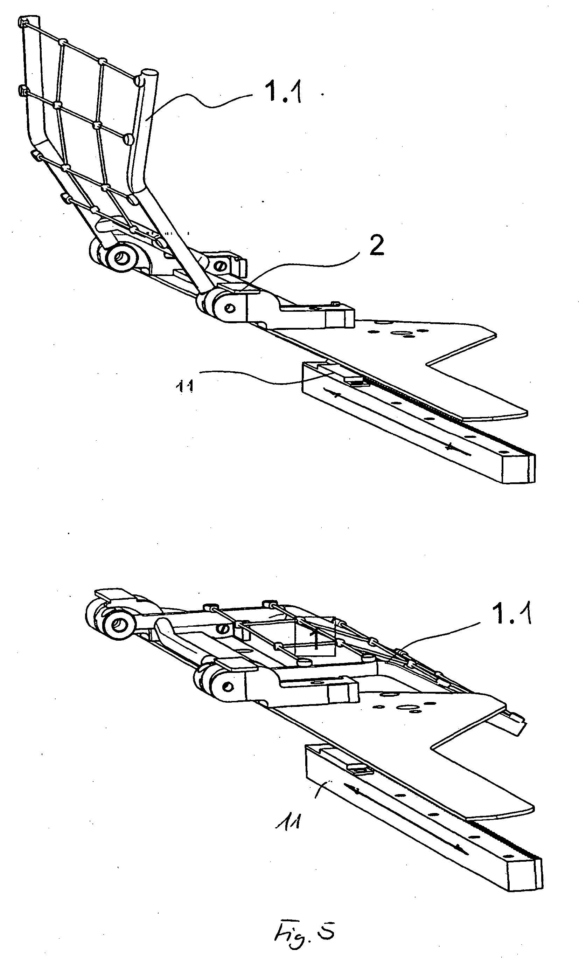

Fig. 5 zeigt eine Kopfstütze, welche nach vorne (hinten) klappbar ist. Auch dies kann durch ein Schieben einer anders ausgeführten, beispielsweise mechanischen Verstelleinrichtung 11, wie Zahnstangen, Ritzel-, Schneckenantrieb etc. realisiert werden. Eine Anbindung mit der Luke ist nicht weiter aufgezeigt, kann aber so erfolgen, dass die Verstelleinrichtung 11 die Kopfstütze 1.1 anhebt, wenn die Luke geöffnet wird und abgekippt wird, wenn die Luke geschlossen wird.

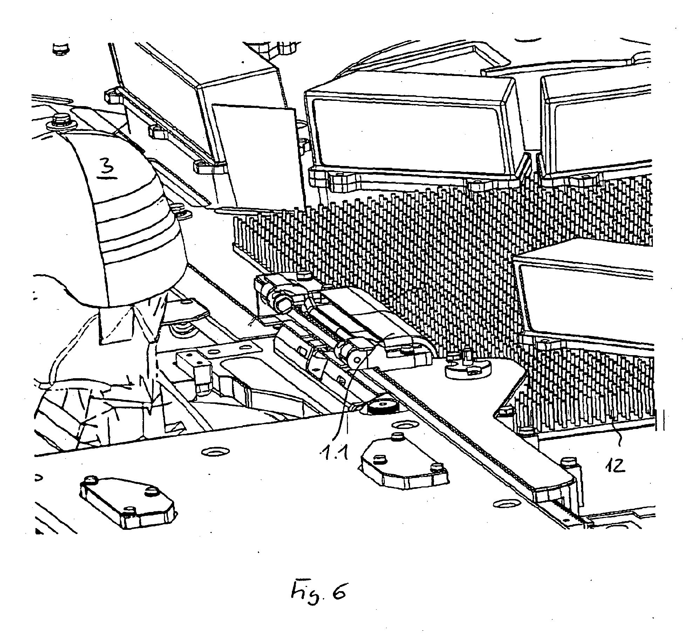

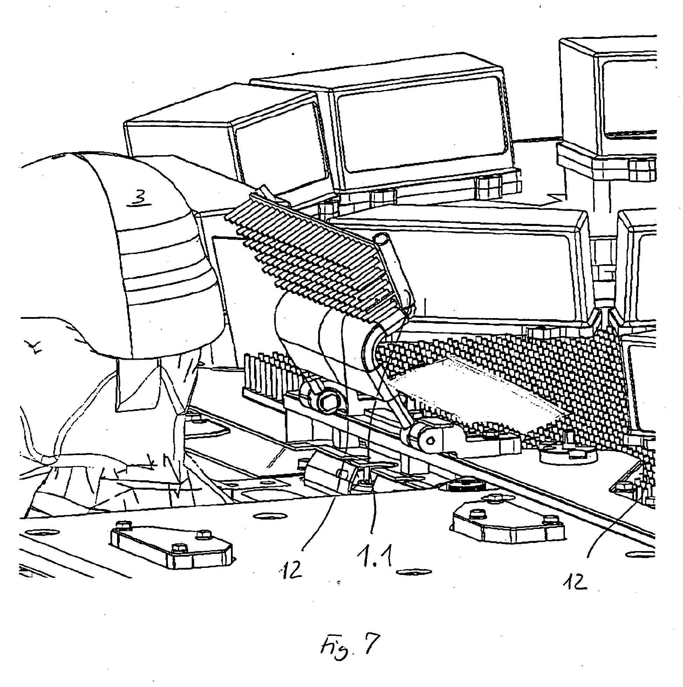

Diese Kopfstütze, wie auch diejenige der Fig. 6 und 7, wird im geklappten Zustand nicht zusammengefaltet und ist insoweit nicht erfindungsgemäß.

Fig. 6 stellt eine Kopfstütze 1.1 mit einem Bombletschutz in der nach vorne (hinten) abgeklappten Stellung dar. In Fig. 7 ist die Kopfstütze 1.1 mit Bombletschutz 12 in der hoch geschwenkten Stellung zu sehen. Dieser Bombletschutz 12 als Schutz gegen äußere Einwirkungen kann so aufgebaut sein, wie er bekanntlich auf dem Dach des Fahrzeuges etc. verwendet wird. Dieser wird dann mit der Kopfstütze angehoben.

## Patentansprüche

1. Kopfstütze (1) für ein Fahrzeug (4), insbesondere für ein Kampffahrzeug, wobei die Kopfstütze (1) in einen geklappten Zustand verschwenkbar ist und nur bei Bedarf in einen geöffneten Zustand gebracht wird, **dadurch gekennzeichnet, dass** die Kopfstütze (1) in einer Führung bzw. Halterung (2) der Kopfstütze (1) versenkbar ist, am Fahrzeug (4) und in der Halterung (2) federnd gelagerte Betätigungselemente (7) integriert sind, welche die Kopfstütze (1) in einen geklappten zusammengefalteten oder den geöffneten Zustand bringen.

2. Kopfstütze (1) nach Anspruch 1, **dadurch gekennzeichnet, dass** die Kopfstütze (1) eine starre oder flexible Strebenstruktur (6) besitzt.

3. Kopfstütze (1) nach Anspruch 1 oder 2, **dadurch gekennzeichnet, dass** die Kopfstütze (1) durch Ziehen an einer Anbindung (10) in den zusammengefalteten geklappten oder geöffneten Zustand gebracht wird.

4. Kopfstütze (1) nach Anspruch 3, **dadurch gekennzeichnet, dass** die Anbindung (10) die Kopfstütze (1) durch Querbewegen in die jeweilige Stellung bringt.

5. Kopfstütze (1) nach Anspruch 4, **dadurch gekennzeichnet, dass** die Kopfstütze (1) durch Querbewegen einer Verstelleinrichtung (11) in die jeweilige Stellung gebracht wird.

6. Kopfstütze (1) nach Anspruch 5, **dadurch gekennzeichnet, dass** die Verstelleinrichtung (11) eine Zahnstange, ein Ritzel, Schneckenantrieb etc. ist.

7. Kopfstütze (1) nach einem der Ansprüche 2 bis 6, **dadurch gekennzeichnet, dass** geeignete Polsterungen um bzw. in der Strebenstruktur vorgesehen werden.

8. Kopfstütze (1) nach einem der Ansprüche 2 bis 7, **dadurch gekennzeichnet, dass** die flexible Struktur eine Seilstruktur ist.

9. Kopfstütze (1) nach einem der Ansprüche 1 bis 8, **dadurch gekennzeichnet, dass** im aufgeklappten Zustand mechanische Verriegelungselemente vorgesehen sind, die zur Aufnahme der Kräfte bei einem Crash dienen.

10. Kopfstütze (1) nach einem der Ansprüche 1 bis 9, **dadurch gekennzeichnet, dass** an der Kopfstütze (1) ein Schutz (12) gegen äußere Einwirkungen vorgesehen ist.

11. Fahrzeug (4) mit einer Kopfstütze (1, 1.1) nach einem der Ansprüche 1 bis 1 0.

12. Fahrzeug (4) mit Luke sowie einer Kopfstütze (1, 1.1) nach einem der Ansprüche 1 bis 10.

13. Fahrzeug nach Anspruch 12, **dadurch gekennzeichnet, dass** das Aufrichten der Kopfstütze (1) in den Gebrauchszustand mit dem Öffnen der Luke des Fahrzeuges (4) und das Einklappen mit dem Schließen der Luke verbunden ist.

14. Fahrzeug nach Anspruch 12, **dadurch gekennzeichnet, dass** die Kopfstütze (1) in die Gebrauchsstellung automatisch verbracht wird, wenn eine mögliche Crash-Situation durch moderne Systeme vorab detektiert wird, spätestens aber dann, wenn der Crash erfolgt ist.

## Claims

1. Head rest (1) for a vehicle (4), in particular for an armoured vehicle, wherein the head rest (1) is pivotable into a folded state and is brought into an open state only when required, **characterized in that** the head rest (1) is lowerable in a guide or holder (2) of the head rest (1) on the vehicle (4), and resiliently mounted actuating elements (7) are integrated in the holder (2), said actuating elements bringing the head rest (1) into a folded up state or into the open state.

2. Head rest (1) according to Claim 1, **characterized in that** the head rest (1, 1.1) has a rigid or flexible strut structure (6).

3. Head rest (1) according to Claim 1 or 2, **characterized in that** the head rest (1) is brought into the folded up or open state by a connection (10) being pulled.

4. Head rest (1) according to Claim 3, **characterized in that** the connection (10) brings the head rest (1) into the respective position by moving transversely.

5. Head rest (1) according to Claim 4, **characterized in that** the head rest (1) is brought into the respective position by an adjustment device (11) moving transversely.

6. Head rest (1) according to Claim 5, **characterized in that** the adjustment device (11) is a rack, a pinion, a worm drive, etc.

7. Head rest (1) according to one of Claims 2 to 6, **characterized in that** suitable padding is provided around and/or in the strut structure.

8. Head rest (1) according to one of Claims 2 to 7, **characterized in that** the flexible structure is a cable structure.

9. Head rest (1) according to one of Claims 1 to 8, **characterized in that** mechanical locking elements which serve for absorbing the forces in the event of a crash are provided in the unfolded state.

10. Head rest (1) according to one of Claims 1 to 9, **characterized in that** a guard (12) against external effects is provided on the head rest (1).

11. Vehicle (4) with a head rest (1) according to one of Claims 1 to 10.

12. Vehicle (4) with a hatch and a head rest (1) according to one of Claims 1 to 10.

13. Vehicle according to Claim 12, **characterized in that** the erecting of the head rest (1) into the use state is connected to the opening of the hatch of the vehicle (4), and the retraction is connected to the closing of the hatch.

14. Vehicle according to Claim 12, **characterized in that** the head rest (1) is automatically brought into the use position if a possible crash situation is detected in advance by modern systems, but at the latest when the crash has taken place.

## Revendications

1. Appuie-tête (1) pour un véhicule (4), en particulier pour un véhicule de combat, l'appuie-tête (1) pouvant être pivoté dans un état rabattu et n'étant amené à un état ouvert qu'en cas de besoin, **caractérisé en ce que** l'appuie-tête (1) peut être enfoncé dans un guide ou un support (2) de l'appuie-tête (1) sur le véhicule (4) et des éléments d'actionnement (7) montés sur ressort sont intégrés dans le support (2), lesquels éléments d'actionnement amènent l'appuie-tête (1) à un état rabattu replié ou à l'état ouvert.

2. Appuie-tête (1) selon la revendication 1, **caractérisé en ce que** l'appuie-tête (1, 1.1) présente une structure en treillis (6) rigide ou flexible.

3. Appuie-tête (1) selon la revendication 1 ou 2, **caractérisé en ce que** l'appuie-tête (1) est amené à l'état rabattu replié ou ouvert par traction sur un raccord (10).

4. Appuie-tête (1) selon la revendication 3, **caractérisé en ce que** le raccord (10) amène l'appuie-tête (1) à la position respective par déplacement transversal.

5. Appuie-tête (1) selon la revendication 4, **caractérisé en ce que** l'appuie-tête (1) est amené à la position respective par déplacement transversal d'un dispositif de réglage (11).

6. Appuie-tête (1) selon la revendication 5, **caractérisé en ce que** le dispositif de réglage (11) est une crémaillère, un pignon, un entraînement à vis sans fin, etc.

7. Appuie-tête (1) selon l'une quelconque des revendications 2 à 6, **caractérisé en ce que** des rembourrages appropriés sont prévus autour de la structure en treillis ou dans cette dernière.

8. Appuie-tête (1) selon l'une quelconque des revendications 2 à 7, **caractérisé en ce que** la structure flexible est une structure de cordes.

9. Appuie-tête (1) selon l'une quelconque des revendications 1 à 8, **caractérisé en ce que** des éléments de verrouillage mécaniques sont prévus à l'état déplié, lesquels servent à absorber les forces lors d'une collision.

10. Appuie-tête (1) selon l'une quelconque des revendications 1 à 9, **caractérisé en ce qu'**une protection (12) contre des influences extérieures est prévue sur l'appuie-tête (1).

11. Véhicule (4) comprenant un appuie-tête (1) selon l'une quelconque des revendications 1 à 10.

12. Véhicule (4) comprenant un hublot ainsi qu'un appuie-tête (1) selon l'une quelconque des revendications 1 à 10.

13. Véhicule selon la revendication 12, **caractérisé en ce que** le redressement de l'appuie-tête (1) dans l'état d'utilisation est lié à l'ouverture du hublot du véhicule (4) et l'escamotage est lié à la fermeture du hublot.

14. Véhicule selon la revendication 12, **caractérisé en ce que** l'appuie-tête (1) est automatiquement amené à la position d'utilisation lorsqu'une situation de collision éventuelle a été préalablement détectée par des systèmes modernes, mais au plus tard lorsque la collision a eu lieu.
